# EUROPEAN PATENT APPLICATION

(11) **EP 3 015 887 A1**
(43) Date of publication of application: **04.05.2016**
(21) Application number: 14190695.8
(22) Date of filing: 28.10.2014
(51) Int. Cl.: G02B 6/126, G02B 6/14

(54) **Polarization splitter and rotator device**

(71) Applicant: Huawei Technologies Co., Ltd., Longgang District Shenzhen, Guangdong 518129 (CN)
(72) Inventor: Lamponi, Marco, 80992 Munich (DE); Brouckaert, Joost, 80992 Munich (DE)
(74) Representative: Kreuz, Georg Maria

(57) **Abstract**

A polarization splitter and rotator device (500) includes an optical mode converter (501) comprising a first optical waveguide (511), wherein a core (515, 517a, 517b) of the first optical waveguide (511) is asymmetrically shaped provoking polarized light coupled into the first optical waveguide (511) to exchange its transverse magnetic mode of zeroth order (TM0) to a transverse electric mode of first order (TE0) while leaving its transverse electric mode of zeroth order (TE0) unchanged; and an output coupler (503) comprising a second optical waveguide (512) coupled to the first optical waveguide (511) and a third optical waveguide (513) adiabatically coupled to the second optical waveguide (512), the adiabatically coupling provoking the polarized light coupled from the first optical waveguide (511) into the second optical waveguide (512) to spread its power between the second optical waveguide (512) and the third optical waveguide (513) by coupling its transverse electric mode of first order (TE1) as transverse electric mode of zeroth order (TE0) into the third optical waveguide (513) and keeping its transverse electric mode of zeroth order (TE0) propagating in the second optical waveguide (512) without coupling to the third optical waveguide (513).

## Description

### TECHNICAL FIELD

The present disclosure relates to a polarization splitter and rotator device, in particular a polarization splitter and rotator device for a silicon nitride platform based on adiabatic conversion in cross-section asymmetric waveguide and adiabatic demultiplexing. The disclosure further relates to a method for producing a polarization splitter and rotator device. The disclosure generally relates to the field of photonic integrated circuits.

### BACKGROUND

Silicon photonics is rapidly gaining importance as a generic technology platform for a wide range of applications in telecommunications, data communications, interconnect and sensing. It allows implementing photonic functions through the use of CMOS (Complementary Metal Oxide Semiconductor) compatible wafer-scale technologies on high quality, low cost silicon substrates. However, pure passive silicon waveguide devices still have limited performance in terms of insertion loss, phase noise (which results in channel crosstalk) and temperature dependency. This is due to the high refractive index contrast between the SiO₂ (silicon dioxide) cladding and the Si (silicon) core, the nonuniform Si layer thickness and the large thermo-optic effect of silicon.

Silicon nitride-based passive devices offer superior performance. Propagation loss below 0.1dB/cm has been demonstrated for waveguides with a 640nm thick SiNₓ (silicon nitride) core and even below 0.1 dB/m for waveguides with a 50nm thick core. Also, the slightly lower refractive index (n) contrast between SiNₓ (n=2) and SiO₂ (n=1.45) versus Si (n=3.5) and SiO₂ (n=1.45) results in less phase noise and larger fabrication tolerances. This facilitates the fabrication of high performance but still very compact optical circuits such as AWGs (Arrayed Waveguide Gratings), ring resonators, etc. Silicon nitride waveguides have been reported both as a high performance passive waveguide layer on an active silicon photonics chip but also as 'stand-alone' passive optical chips.

The high refractive index contrast of both the silicon and silicon nitride material systems (as compared to e.g. silica waveguides) introduces a strong polarization dependency. To realize polarization independent optical circuits, polarization diversity configurations using polarization splitters and rotators (PSR) are typically used. The polarization splitting/rotating functionality can be implemented in a single device (PSR) or in a combination of a separate polarization splitter (PS) followed by a rotator (PR).

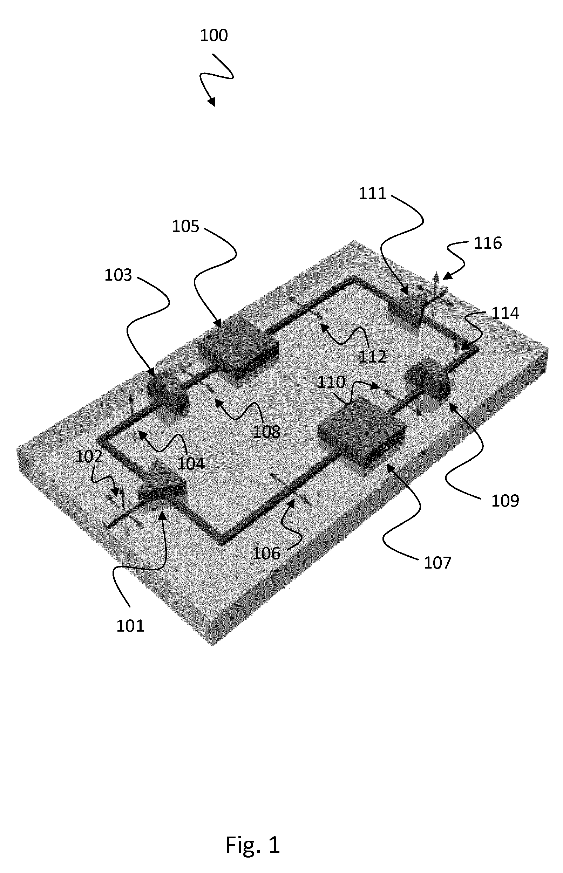

In a polarization diversity configuration 100 as shown in Fig. 1, the input signal 102 is split into its two orthogonal polarization components (TE 106 and TM 104) by a polarization splitter 101 and one of these components 104 is rotated 103 by 90° (TM 104→TE 108) to achieve a single on-chip polarization state. Two identical photonic components 105, 107 are used for the two arms of the architecture. At the output, the two arms 112, 114 are recombined 111 to provide the output signal 116 after one of the polarization components 110 is rotated 109 to prevent interference between the two signals. This way, a polarization transparent circuit is created out of two polarization sensitive photonic components.

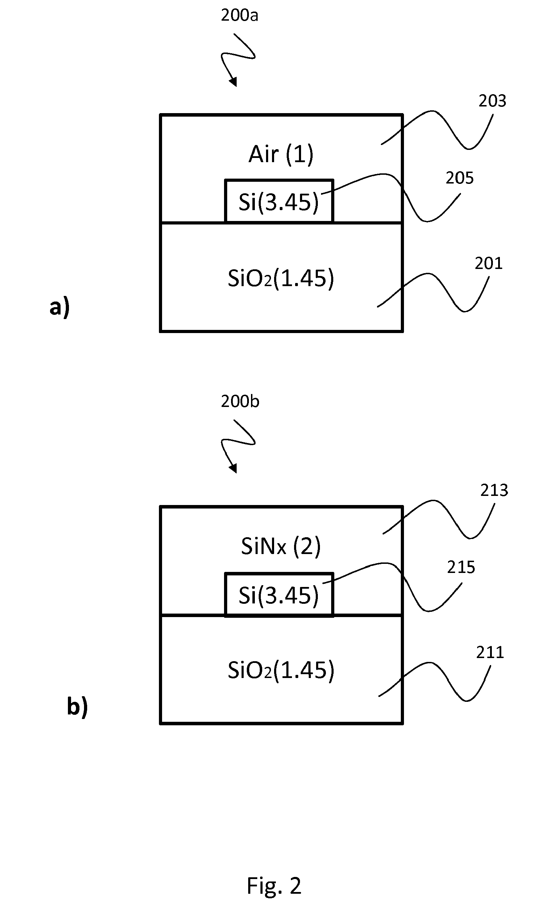

Many polarization splitter and rotators (PSRs) in silicon make use of the fact that polarization conversion is possible in vertical asymmetric waveguide configurations 200a, 200b as shown in Figs. 2a and 2b. In this case, the bottom cladding 201, 211 is silica (SiO₂) and the top cladding 203, 213 is a different material with a refractive index lower than silicon (n=3.45) 205, 215. Both devices with air (n=1) 200a, see Fig. 2a, and silicon nitride (n=2) 200b, see Fig. 2b, as top cladding material 203, 213 have been reported. The waveguide cross-sections are shown in Figs. 2a and 2b.

The problem with the air top-cladding configurations 200a is that these devices need to be hermetically packaged in order to keep the refractive index constant. This is not the case with the silicon nitride cladded PSRs 200b.

The examples of Figs. 2a and 2b make use of asymmetric silicon waveguides with a silica bottom- and silicon nitride or air top cladding layer. Introducing vertical asymmetry for silicon nitride waveguides is not straightforward because air cannot be used as a top cladding layer without significantly increasing production costs. The refractive index of the top cladding material needs to differ as much as possible from silicon dioxide (n=1.45) but needs to be lower than the index of the silicon nitride core (n=2). This range is too small to be able to obtain a strong asymmetry. Further, the material(s) need to be CMOS-compatible.

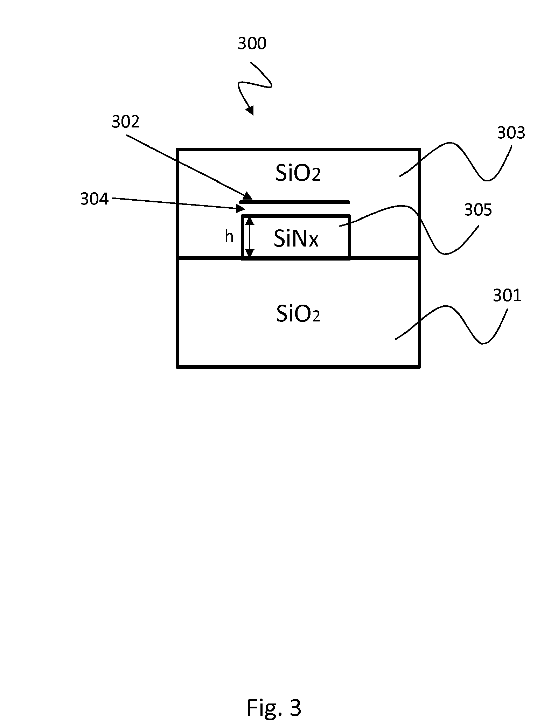

Another configuration 300 using a silicon nitride waveguide 305 with a silica top 303 and bottom 301 cladding and with a thin silicon layer 302 (10-100nm) on top of the waveguide to create vertical asymmetry is shown in Fig. 3. A thin silica layer 304 (<100nm) can be present in between for ease of fabrication. The height of the waveguide (h) is depending on the wavelength of the application. For wavelengths around 1.55µm, the typical value is about 400nm.

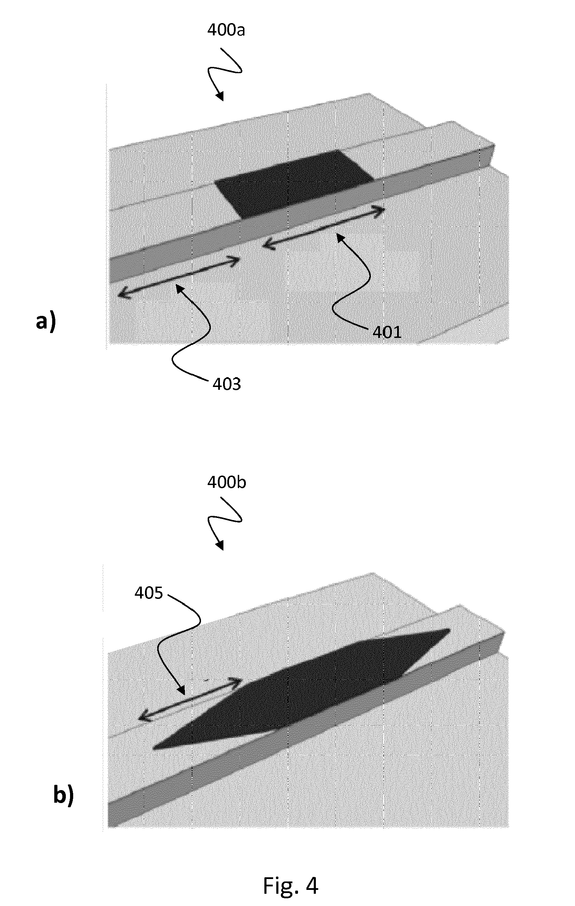

The standard silicon nitride waveguide with a symmetric cladding and the asymmetric version can be butt-coupled. In this case however, there is a transition loss. By adding short tapers (L<50µm), the transition loss is negligible. Both configurations are shown in Figs. 4a and 4b. Fig. 4a shows a configuration 400a in which transitions are made between a standard vertical symmetric SiNₓ waveguide 403 and an asymmetric one 401. The transition can be direct as shown in Fig. 4a or by using a taper 405 between the vertical symmetric waveguide and the asymmetric one as shown in Fig. 4b. Note that the silica top cladding is not shown in these figures. There are several benefits to this approach but one drawback involves the extra silicon layer and controlling the thickness of oxide between the silicon nitride and the poly.

There is a need for a high performance and easy to fabricate polarization splitter and rotator, in particular on the silicon nitride platform.

### SUMMARY

It is the object of the invention to provide a high performance and easy to fabricate polarization splitter and rotator.

This object is achieved by the features of the independent claims. Further implementation forms are apparent from the dependent claims, the description and the figures.

In order to describe the invention in detail, the following terms, abbreviations and notations will be used:
- PSR:: polarization splitter and rotator,
- TE mode:: transverse electric mode of an electro-magnetic wave,
- TE0 mode:: TE mode of zeroth order,
- TE1 mode:: TE mode of first order,
- TM mode:: transverse magnetic mode of an electro-magnetic wave,
- TM0 mode:: TM mode of zeroth order,
- CMOS:: Complementary Metal Oxide Semiconductor,
- SiO₂:: silicon dioxide, silica,
- SiNₓ:: silicon nitride,
- AWGs:: Arrayed Waveguide Gratings,
- RI, n:: Refractive Index, abbreviated as n,
- SOI:: Silicon On Insulator,
- um:: micro-meter, µm,
- adiabatic:: An adiabatic coupling is the transformation of one optical guided mode to another guided mode that occurs progressively without light scattering to other modes.

According to a first aspect, the invention relates to a polarization splitter and rotator device, comprising: an optical mode converter comprising a first optical waveguide, wherein a core of the first optical waveguide is asymmetrically shaped provoking polarized light coupled into the first optical waveguide to exchange its transverse magnetic mode of zeroth order to a transverse electric mode of first order while leaving its transverse electric mode of zeroth order unchanged; and an output coupler comprising a second optical waveguide coupled to the first optical waveguide and a third optical waveguide adiabatically coupled to the second optical waveguide, the adiabatically coupling provoking the polarized light coupled from the first optical waveguide into the second optical waveguide to spread its power between the second optical waveguide and the third optical waveguide by coupling its transverse electric mode of first order as transverse electric mode of zeroth order into the third optical waveguide and keeping its transverse electric mode of zeroth order propagating in the second optical waveguide without coupling to the third optical waveguide.

Such a polarization splitter and rotator device provides a high performance and is easy to fabricate.

In a first possible implementation form of the PSR device according to the first aspect, the shape of the core of the first optical waveguide is asymmetric with respect to a vertical axis and/or a horizontal axis of the first optical waveguide.

Such an asymmetry is adequate for converting the TM mode into a TE mode.

In a second possible implementation form of the PSR device according to the first aspect as such or according to the first implementation form of the first aspect, the core of the first optical waveguide comprises at least one abrasion forming the asymmetric shape of the core.

An abrasion in the core can easily be produced, e.g. by applying an etching or a grinding production process.

In a third possible implementation form of the PSR device according to the first aspect as such or according to any of the preceding implementation forms of the first aspect, the core of the first optical waveguide comprises a first section and a second section having a different thickness than the first section, wherein the different thickness of the first section and the second section forms the asymmetric shape of the core.

Forming two sections of different thickness is easy to produce, e.g. by etching or grinding down to different heights.

In a fourth possible implementation form of the PSR device according to the first aspect as such or according to any of the preceding implementation forms of the first aspect, a cross-section of the core of the first optical waveguide is asymmetric.

Having an asymmetric cross-section of the core allows converting the TM0 mode into a TE1 mode while keeping the TE0 mode.

In a fifth possible implementation form of the PSR device according to the first aspect as such or according to any of the preceding implementation forms of the first aspect, a cross-section of the core of the first optical waveguide is shaped as a first rectangle put on top of a second rectangle having a different size than the first rectangle.

Such a configuration of the core improves converting the TM0 mode into a TE1 mode while keeping the TE0 mode.

In a sixth possible implementation form of the PSR device according to the first aspect as such or according to any of the preceding implementation forms of the first aspect, the second waveguide is a continuation of the first waveguide.

When the second waveguide is a continuation of the first waveguide, the TE0 mode can optimally transfer from the first waveguide to the second waveguide without losses.

In a seventh possible implementation form of the PSR device according to the first aspect as such or according to any of the preceding implementation forms of the first aspect, the second waveguide is symmetrically shaped.

When the second waveguide is symmetrically shaped the TE0 mode can optimally propagate through the second waveguide.

In an eighth possible implementation form of the PSR device according to the first aspect as such or according to any of the preceding implementation forms of the first aspect, the core of the first optical waveguide is formed as a tapered structure in a longitudinal direction of the first optical waveguide.

Such a tapered structure configuration facilitates conversion between TM0 mode and TE1 mode in the first optical waveguide.

In a ninth possible implementation form of the PSR device according to the first aspect as such or according to any of the preceding implementation forms of the first aspect, the core of the first optical waveguide has a refractive index in the range between 1.8 and 2.5.

A core having such refractive index provides sufficient refractive index contrast and therefore less phase noise and larger fabrication tolerances.

In a tenth possible implementation form of the PSR device according to the first aspect as such or according to any of the preceding implementation forms of the first aspect, the core of the first optical waveguide is made of one of Silicon Nitride, SiON, ta2O5 and TiO2.

These materials provide better refractive index contrast to SiO₂ than silicon, thereby resulting in superior performance.

In an eleventh possible implementation form of the PSR device according to the first aspect as such or according to any of the preceding implementation forms of the first aspect, the core of the first optical waveguide is embedded into a cladding having a different refractive index than the core, in particular a cladding made of silicon dioxide.

When the cladding of the core has a different refractive index as the core, wave-guiding is supported. A cladding made of silicon dioxide provides high performance over a broad wavelength range.

According to a second aspect, the invention relates to a method for producing a polarization splitter and rotator device, the method comprising: producing an optical mode converter by forming a core of a first optical waveguide, removing material from the core to create an asymmetric shape of the core and embedding the core into a cladding, wherein the asymmetric shape is provoking polarized light coupled into the first optical waveguide to exchange its transverse magnetic mode of zeroth order to a transverse electric mode of first order while leaving its transverse electric mode of zeroth order unchanged; and producing an output coupler by coupling a second optical waveguide to the first optical waveguide and adiabatically coupling a third optical waveguide to the second optical waveguide, wherein the adiabatically coupling is provoking the polarized light coupled from the first optical waveguide into the second optical waveguide to spread its power between the second optical waveguide and the third optical waveguide by coupling its transverse electric mode of first order as transverse electric mode of zeroth order into the third optical waveguide and keeping its transverse electric mode of zeroth order propagating in the second optical waveguide without coupling to the third optical waveguide.

By such a production method a high-performance polarization splitter and rotator device can be produced.

In a first possible implementation form of the method according to the second aspect, the material is removed from the core by etching.

Etching is a simple process step that can be used to very efficiently provide the asymmetry in the core.

In a second possible implementation form of the method according to the second aspect as such or according to the first implementation form of the second aspect, producing the optical mode converter and the output coupler is performed by CMOS compatible wafer-scale processing.

CMOS compatible wafer-scale processing is a standard production method that can be efficiently applied to produce the PSR device.

Further aspects of the invention relate to a waveguide configuration that is compatible with the silicon nitride platform and that allows to make efficient polarization splitters/rotators (PSR).

Further aspects of the invention relate to a shallow asymmetric waveguide converter configuration for the silicon nitride platform used to create a mode converter which transforms TM0 into TE1 mode. The TE0 mode is left unchanged.

Further aspects of the invention relate to a combination of this mode converter with an TE0 / TE1 de-multiplexer which separates the TE0 and TE1 (that was TM0). The output coupler can be executed in many ways. A preferred embodiment is a three stage output coupler as described below, allowing for a large bandwidth and strong tolerance to fabrication. This combination creates a polarization splitter-rotator (PSR). The configuration is equally valid for other waveguide materials where the refractive index is in the range 1.8-2.5 (e.g., SiON, Ta2O5, TiO2 waveguides and many others).

### BRIEF DESCRIPTION OF THE DRAWINGS

Further embodiments of the invention will be described with respect to the following figures, in which:
Fig. 1 shows a block diagram illustrating a polarization diversity configuration 100 where the input signal 102 is split into its two orthogonal polarization components TE 106 and TM 104;
Figs. 2a and 2b show cross-sections of two vertical asymmetric waveguide configurations 200a, 200b using air (Fig. 2a) and SiNx (Fig. 2b) as top cladding material;
Fig. 3 shows a cross-section of a vertical asymmetric waveguide configuration 300 using a silicon nitride waveguide 305 with a silica top 303 and bottom 301 cladding and a thin silicon layer 302 on top of the waveguide;
Figs. 4a and 4b show side views of configurations 400a, 400b in which transitions are made between a vertical symmetric SiNₓ waveguide 403 and an asymmetric one 401, Fig. 4a shows direct transition, Fig. 4b shows transition by using a taper 405;
Fig. 5a shows a schematic diagram of a polarization splitter and rotator device 500 including a mode conversion section 501 and a demultiplexer section 503 according to an implementation form;
Fig. 5b shows a top view of the mode conversion section 501 of the polarization splitter and rotator device 500 shown in Fig. 5a according to an implementation form;
Fig. 5c shows a cross-sectional view of the plane A-A" through the mode conversion section 501 of the polarization splitter and rotator device shown in Fig. 5b;
Fig. 5d shows a top view of the de-multiplexer section 503 of the polarization splitter and rotator device 500 shown in Fig. 5a according to an implementation form;
Fig. 6a shows a schematic diagram of the mode conversion section 600a of a polarization splitter and rotator device according to an implementation form;
Fig. 6b shows a schematic diagram of the mode conversion section 600a shown in Fig. 6a illustrating TE0 mode propagation according to an implementation form;
Fig. 6c shows a schematic diagram of the mode conversion section 600a shown in Fig. 6a illustrating TM0 to TE1 mode conversion according to an implementation form;
Fig. 7 shows a performance diagram 700 illustrating TM0 to TE1 mode conversion efficiency as a function of taper length for different waveguide configurations according to implementation forms;
Fig. 8a shows a schematic diagram of a three stages de-multiplexer section 800a of a polarization splitter and rotator device according to an implementation form;
Fig. 8b shows a schematic diagram of the three stages de-multiplexer section 800a shown in Fig. 8a illustrating TE1 to TE0 mode conversion according to an implementation form;
Fig. 8c shows a schematic diagram of the three stages de-multiplexer section 800a shown in Fig. 8a illustrating TE0 mode propagation according to an implementation form;
Fig. 9 shows a schematic diagram of a polarization splitter and rotator device 900 including a mode conversion section and a de-multiplexer section 500c illustrating TM0 to TE0 mode conversion according to an implementation form;
Fig. 10 shows a performance diagram 1000 illustrating coupling efficiency between the TE1 mode on the input waveguide and the TE0 mode on the upper output waveguide of the polarization splitter and rotator device 900 shown in Fig. 9; and
Fig. 11 shows a schematic diagram illustrating a method 1300 for producing a polarization splitter and rotator device according to an implementation form.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

The devices and methods described herein may be based on optical waveguides. An optical waveguide is a physical structure that guides electromagnetic waves in the optical spectrum. Optical waveguides may be used as components in integrated optical circuits or as transmission medium in local and/or long haul optical communication systems. Optical waveguides may be classified according to their geometry, e.g. as planar, strip, or fiber waveguides, their mode structure, e.g. as single-mode or multi-mode, their refractive index distribution, e.g. as step or gradient index and their material, e.g. glass, polymer or semiconductor.

The methods and devices described herein may be implemented for producing integrated optical chips. The described devices and systems may include software units and hardware units. The described devices and systems may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The devices described herein may include or may be produced by using III-V materials. III-V compound semiconductors may be obtained by combining group III elements, for example Al, Ga, In, with group V elements, for example N, P, As, Sb. This may result in about 12 possible combinations for the above exemplary elements; the most important ones are probably GaAs, InP GaP and GaN. In the examples described below, InP is used as an exemplary member of a III-V material. It is understood that the use of InP is only an example, any other combination from a goup III element with a group V element, e.g. such as for example GaAs, GaP or GaN can be used as well.

The devices described herein may include or may be produced by using thin films and growing/re-growing of epitaxial (epi) layers. A thin film is a layer of material ranging from fractions of a nanometer to several micrometers in thickness. Applying a thin film to a surface is also called *thin-film deposition.* Any technique for depositing a thin film of material onto a substrate or onto previously deposited layers is referred to as thin-film deposition. "Thin" is a relative term, but most deposition techniques control layer thickness within a few tens of nano-meters. Epitaxy refers to the deposition of a crystalline overlayer on a crystalline substrate. The overlayer is also called an epitaxial (epi) film or epitaxial layer. In some applications, it may be desired that the deposited material forms a crystalline overlayer that has one well-defined orientation with respect to the substrate crystal structure. Epitaxial films may be grown or re-grown from gaseous or liquid precursors. Because the substrate acts as a seed crystal, the deposited film may lock into one or more crystallographic orientations with respect to the substrate crystal.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

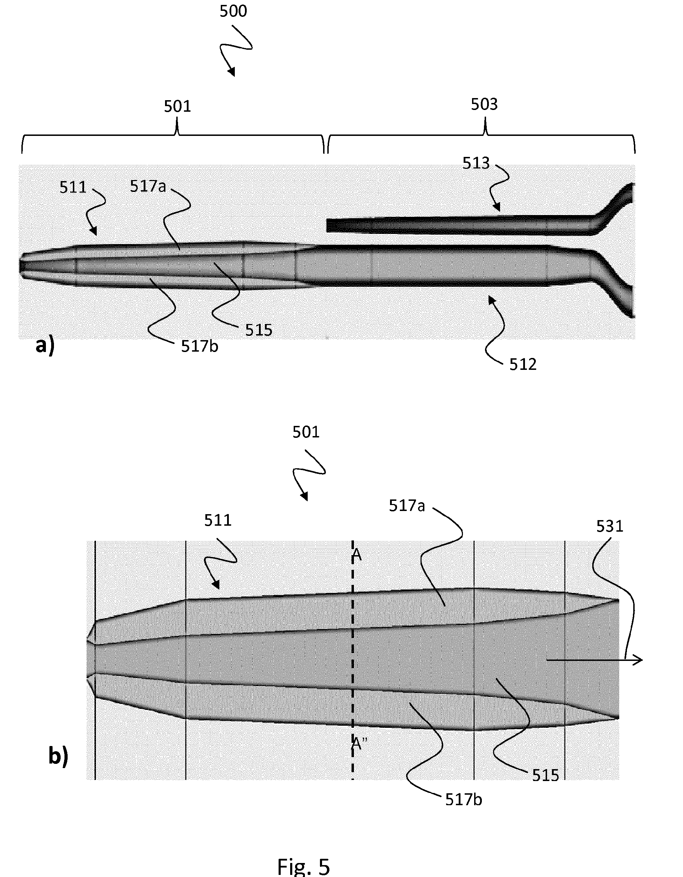

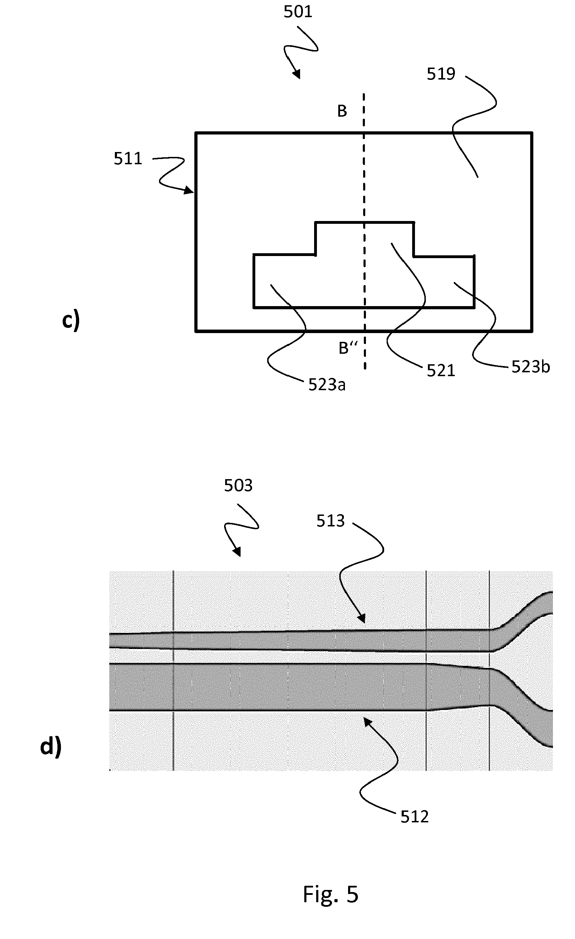

Fig. 5a shows a schematic diagram of a polarization splitter and rotator device 500 including a mode conversion section 501 and a demultiplexer section 503 according to an implementation form. The mode conversion section is also denoted hereinafter as optical mode converter 501 and the demultiplexer section is also denoted hereinafter as output coupler 503 or optical demultiplexer. Fig. 5b shows a top view of the mode conversion section 501 of the polarization splitter and rotator device 500 shown in Fig. 5a according to an implementation form. Fig. 5c shows a cross-sectional view of the plane A-A" through the mode conversion section 501 of the polarization splitter and rotator device shown in Fig. 5b and Fig. 5d shows a top view of the de-multiplexer section 503 of the polarization splitter and rotator device 500 shown in Fig. 5a according to an implementation form.

The optical mode converter 501 includes a first optical waveguide 511. A core 515, 517a, 517b of the first optical waveguide 511 is asymmetrically shaped. This asymmetric shape provokes polarized light coupled into the first optical waveguide 511 to exchange its transverse magnetic mode of zeroth order TM0 to a transverse electric mode of first order TE0 while leaving its transverse electric mode of zeroth order TE0 unchanged.

The output coupler 503 includes a second optical waveguide 512 coupled to the first optical waveguide 511 and a third optical waveguide 513 adiabatically coupled to the second optical waveguide 512. The adiabatically coupling provokes the polarized light coupled from the first optical waveguide 511 into the second optical waveguide 512 to spread its power between the second optical waveguide 512 and the third optical waveguide 513 by coupling its transverse electric mode of first order TE1 as transverse electric mode of zeroth order TE0 into the third optical waveguide 513 and keeping its transverse electric mode of zeroth order TE0 propagating in the second optical waveguide 512 without coupling to the third optical waveguide 513.

The shape of the core 515, 517a, 517b of the first optical waveguide 511 may be asymmetric with respect to a vertical axis and/or a horizontal axis of the first optical waveguide 511. A horizontal axis AA" of the first optical waveguide 511 is depicted in Fig. 5b and a vertical axis BB" of the first optical waveguide 511 is depicted in Fig. 5c. In the implementation form depicted in Figs. 5a - 5d, the asymmetry of the core is with respect to the vertical axis BB" of the first optical waveguide 511.

The core 515, 517a, 517b of the first optical waveguide 511 includes at least one abrasion forming the asymmetric shape of the core 515, 517a, 517b. The abrasion is responsible for the different thicknesses of the two sections 515 and 517a, 517b of the core. The core 515, 517a, 517b of the first optical waveguide 511 may include a first section 515 and a second section 517a, 517b having a different thickness than the first section 515. The different thickness of the first section 515 and the second section 517a, 517b forms the asymmetric shape of the core 515, 517a, 517b. The second section 517a, 517b may have two subsections 517a, 517b that may be located on both sides of the core with respect to a longitudinal direction of the core.

A cross-section of the core 515, 517a, 517b of the first optical waveguide 511 may be asymmetric. The first subsection 517a may be of a different size than the second subsection 517b thereby forming the asymmetry of the cross-section of the core.

The cross-section of the core 515, 517a, 517b of the first optical waveguide 511 may be shaped as a first rectangle 521 put on top of a second rectangle 523a, 523b having a different size than the first rectangle 521 as can be seen from Fig. 5c. The sides 523a, 523b of the second rectangle may form the two subsections 517a, 517b of the second section of the core while the first rectangle 521 may form the first section 515 of the core. The second optical waveguide 512 may be a continuation of the first optical waveguide 511 as can be seen from Fig. 5a. The second optical waveguide 512 may be symmetrically shaped.

The core 515, 517a, 517b of the first optical waveguide 511 may be formed as a tapered structure in a longitudinal direction 531 of the first optical waveguide 511 as can be seen from Fig. 5b. The core 515, 517a, 517b of the first optical waveguide 511 may have a refractive index in the range between 1.8 and 2.5. The core 515, 517a, 517b of the first optical waveguide 511 may be made of Silicon Nitride, SiON, ta2O5 or TiO2. The core 515, 517a, 517b of the first optical waveguide 511 may be embedded into a cladding 519 having a different refractive index than the core 515, 517a, 517b as can be seen from Fig. 5c. The cladding 519 may be made of silicon dioxide.

The structure of Figs. 5a to 5d shows a device 500 where a splitter-rotator may be implemented in silicon nitride without the need for any additional process steps. As can be seen from Figs. 5a to 5d, the asymmetry necessary to generate the mode conversion in the converter 501 is created in the waveguide core 515, 517a, 517b and not in the cladding 519. This may be achieved by using a 'shallow etch' step to locally thin the silicon nitride on both or just on one side of the waveguide 511 as can be seen from Fig. 5c. Moreover, to improve the optical bandwidth and enhance the fabrication tolerance of the device 500, the de-multiplexer section 503 of the device 500 is based on an adiabatic coupler.

The shallow waveguide configuration for mode conversion of TM to TE1 and TE0 to TE0 is depicted in Fig. 5c. The waveguide configuration as presented in Fig. 5c results in a relatively strong horizontal asymmetry. This allows for efficient tapers that can be used for polarization splitter/rotators (PSRs) as shown in Fig. 5b, e.g. on the silicon nitride platform.

The PSR device 500 as shown in Figures 5a to 5d shows a lot of benefits. For example, the PSR device 500 may be manufactured as a CMOS compatible structure. Silicon photonics is attractive because it offers the possibility of fabricating optical devices in CMOS foundries and therefore leveraging the infrastructure created to make electronic chips. For the PSR device 500 all the steps required to make the photonic building blocks are compatible with this infrastructure. No additional process steps have to be added compared to the standard silicon nitride platform. The wavelength bandwidth of the device 500 is extremely wide. No hermetic package is needed because the PSR region has a top cladding. The mode conversion efficiency is very tolerant to dimensional variations of the cross section. The structure avoids the optical losses associated with a silicon nitride to silicon transition when the light is coupled into a silicon nitride waveguide and the PSR is executed in silicon.

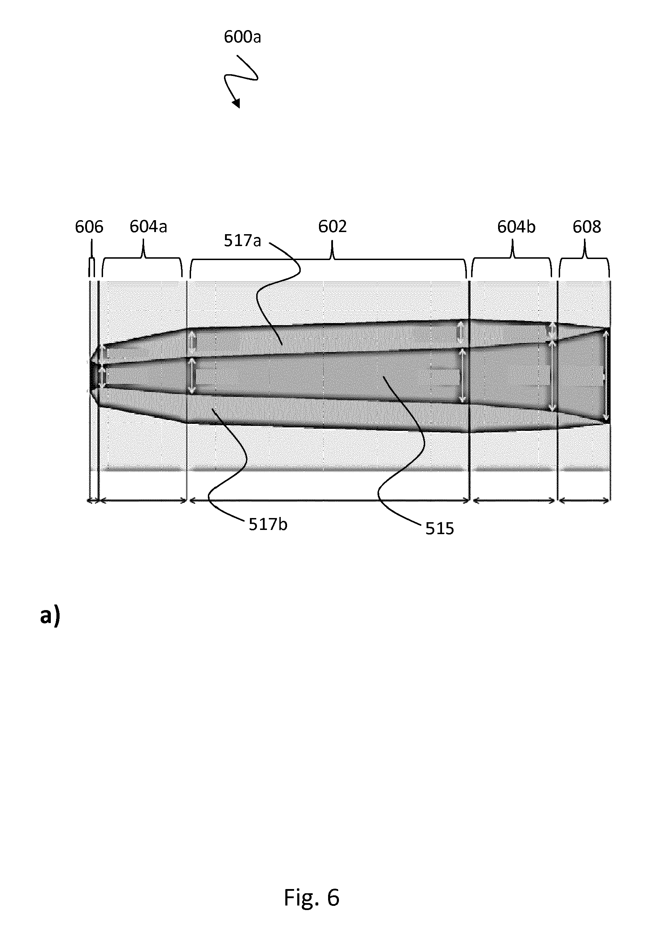

Fig. 6a shows a schematic diagram of the mode conversion section 600a of a polarization splitter and rotator device according to an implementation form. The mode conversion section 600a is an exemplary embodiment of the mode conversion section 501 of the PSR device 500 described above with respect to Figs. 5a to 5d.

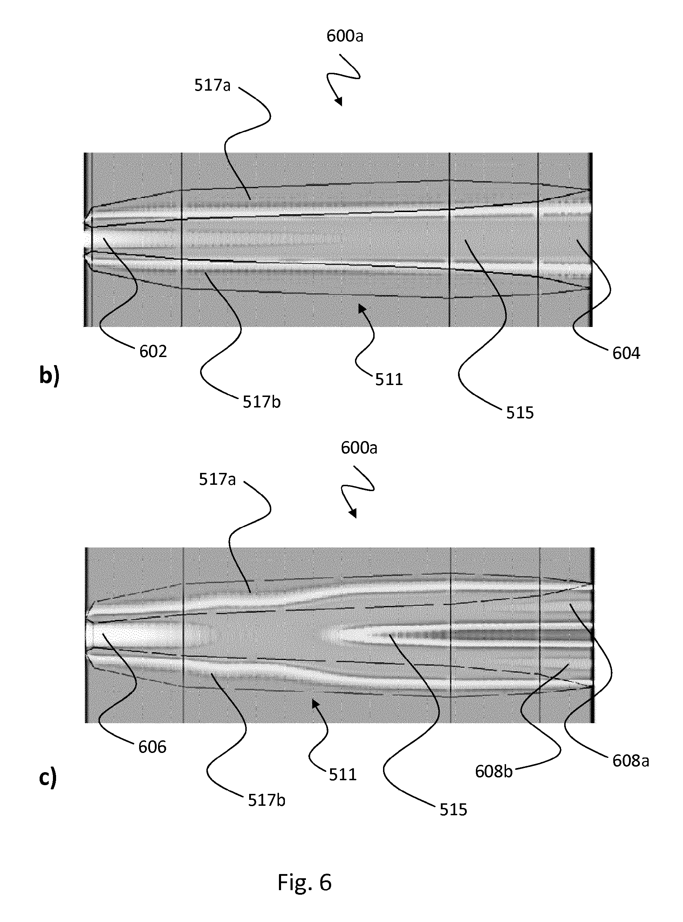

Figs. 6a show the behavior of a taper structure in a waveguide cross-section consisting of a SiNₓ waveguide which is either about 350-450nm thick (full thickness) or about 250-350nm thick (shallow etch areas). By proper design of the structure, the launched TE0 mode will keep its polarization state (TE0→TE0) as can be seen from Fig. 6b while the TM0 mode converts into the first order TE mode (TM0→TE1) as can be seen from Fig. 6c.

The mode conversion section 600a includes five subsections 606, 604a, 602, 604b, 608 in longitudinal direction of the first optical waveguide.

In each of these five subsections, the core is partitioned into a first section 515 and a second section 517a, 517b as described above with respect to Figs. 5a to 5d.

Fig. 6b shows a schematic diagram of the mode conversion section 600a shown in Fig. 6a illustrating TE0 mode propagation according to an implementation form. The TE0 mode 602 at an input of the mode conversion section 600a propagates through the mode conversion section 600a without being converted and leaves the mode conversion section 600a as TE0 mode 604 at an output of the mode conversion section 600a. The TE0 mode mainly propagates in the first section 515 of the first waveguide.

Fig. 6c shows a schematic diagram of the mode conversion section 600a shown in Fig. 6a illustrating TM0 to TE1 mode conversion according to an implementation form. While the TM0 mode 606 at an input of the mode conversion section 600a propagates through the mode conversion section 600a, the TM0 mode is converted into a TE1 mode 608a, 608b and leaves the mode conversion section 600a as TE1 mode 608a, 608b at an output of the mode conversion section 600a. The mode conversion of the TM0 mode to TE1 mode is caused by the asymmetry of the first section 515 and the second section 517a, 517b of the first waveguide.

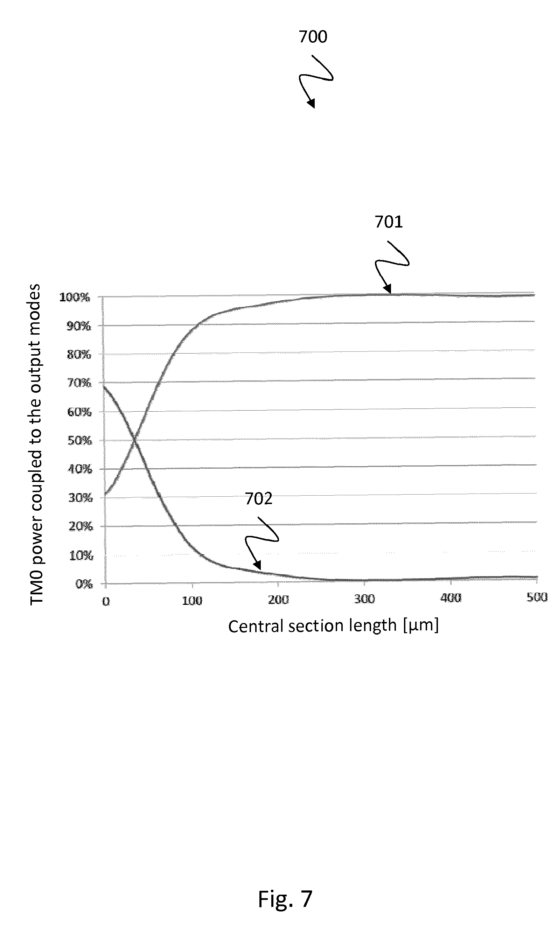

Fig. 7 shows a performance diagram 700 illustrating TM0 to TE1 mode conversion efficiency as a function of taper length for different waveguide configurations according to implementation forms.

**Table 1: Simulation parameters for TM0 to TE1 conversion**

| | |
|---|---|
| Wavelength | 1.55 µm |
| SiNx waveguide thickness | ∼ 400 nm |
| Shallow SiNx thickness | ∼ 300 nm |

The parameters used in the simulation are shown in table 1. Figure 7 is a simulation of the TM0 to TE1 conversion efficiency as a function of the length of the central section of the taper structure. The TE1 mode is referenced by 701, the TM0 mode is referenced by 702. When the central section exceeds a length of about 300µm this results in ∼100% conversion efficiency. By using the shallow etched waveguide configuration as presented in Figures 6a to 6c here, relatively efficient conversion can be obtained. The structure length is comparable to the vertically asymmetric waveguide configuration but processing is simpler. These simulations have been done for λ=1.55µm but other wavelengths are possible.

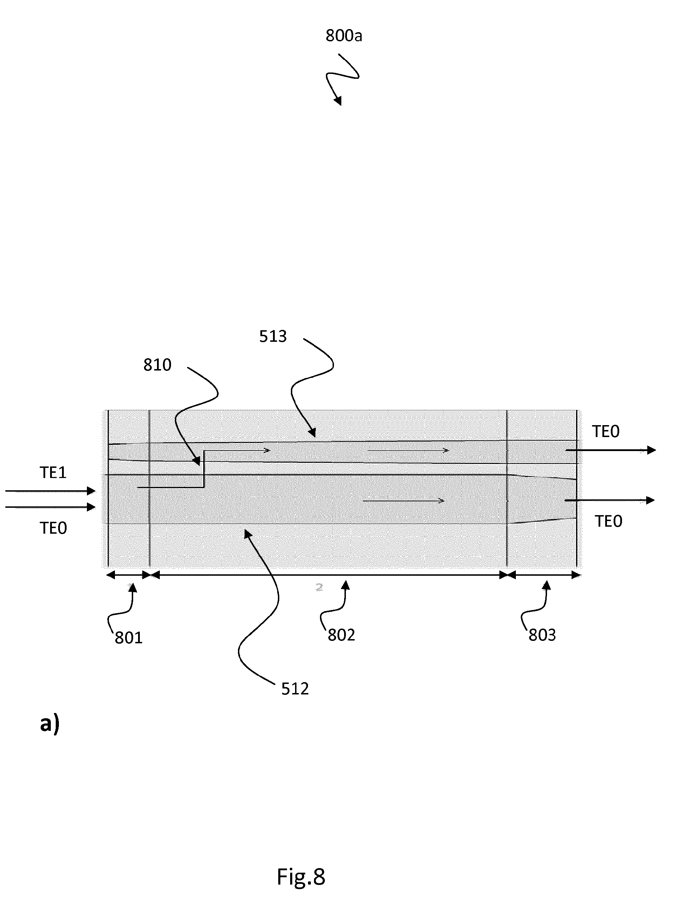

Fig. 8a shows a schematic diagram of a three stages de-multiplexer section 800a of a polarization splitter and rotator device according to an implementation form. The de-multiplexer section 800a is an exemplary embodiment of the de-multiplexer section 503 of the PSR device 500 described above with respect to Figs. 5a to 5d. In a first stage 801 the TE1 mode and the TE0 mode are entering the second optical waveguide 512 of the de-multiplexer section 800a. In a second stage 802 after the first stage 801 with respect to a light propagation direction the TE1 mode is converted 810 to a TE0 mode in the third optical waveguide 513 and the TE0 mode propagates through the second optical waveguide 512 without being converted. In a third stage 803 after the second stage 802 the TE0 mode in the third optical waveguide 513 and the TE0 mode in the second optical waveguide 512 are leaving the de-multiplexer section 800a.

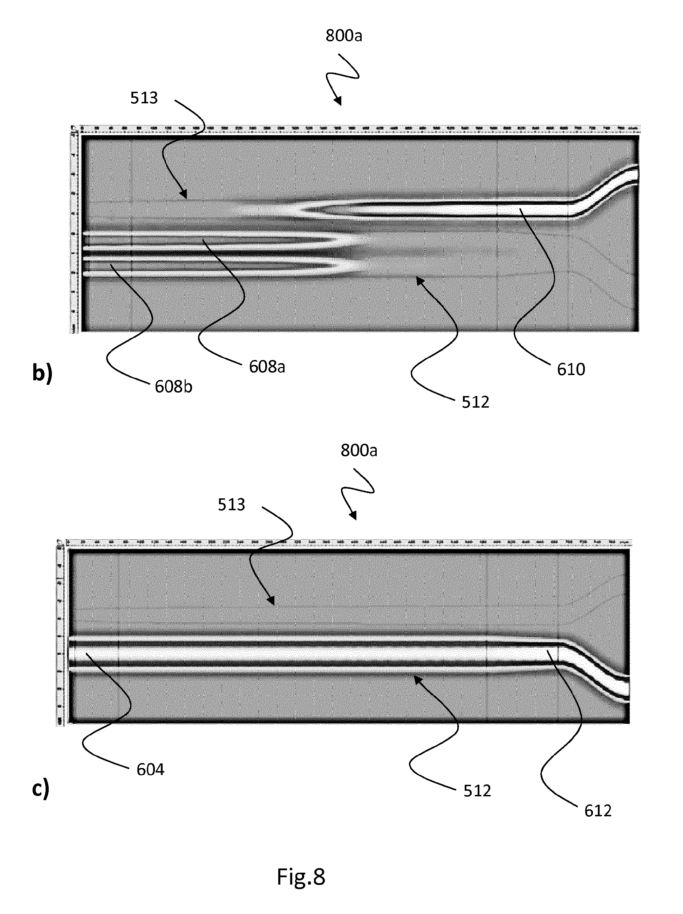

Fig. 8b shows a schematic diagram of the three stages de-multiplexer section 800a shown in Fig. 8a illustrating TE1 to TE0 mode conversion according to an implementation form. The TE1 mode 608a, 608b in the second optical waveguide 512 is converted to a TE0 mode 610 in the third optical waveguide 513. The TE1 mode 608a, 608b corresponds to the TE1 mode leaving the first waveguide 511 of the mode conversion section 600a as described above with respect to Fig 6c.

Fig. 8c shows a schematic diagram of the three stages de-multiplexer section 800a shown in Fig. 8a illustrating TE0 mode propagation according to an implementation form. The TE0 mode 604 propagates through the second optical waveguide 512 without being converted and leaves the second optical waveguide 512 as TE0 mode 612. The TE0 mode 604 corresponds to the TE0 mode leaving the first waveguide 511 of the mode conversion section 600a as described above with respect to Fig 6b.

In Figs. 8a to 8c, the de-multiplexer section 800a is designed as an adiabatic de-multiplexer, the SiNₓ waveguide is about 400 nm thick. By proper design of the structure, the launched TE1 mode will be converted in the TE0 mode of the first output port (TE0→TE0) while the TE0 mode stays into the waveguide and is routed to the second output port. In this embodiment a three stages adiabatic coupler is used and two bends on the output to decouple the two waveguides.

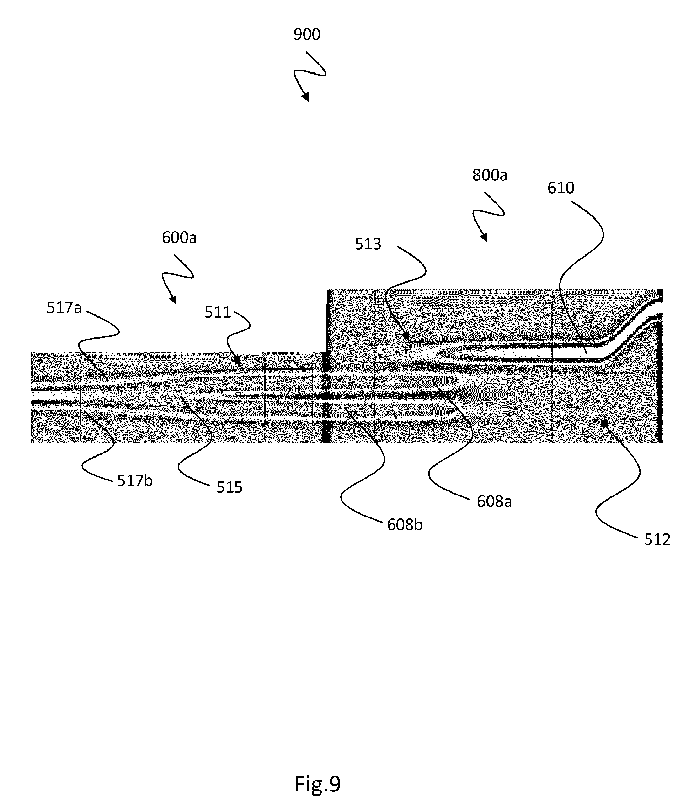

Fig. 9 shows a schematic diagram of a polarization splitter and rotator device 900 including a mode conversion section 600a and a de-multiplexer section 800a illustrating TM0 to TE0 mode conversion according to an implementation form. The mode conversion section 600a corresponds to the mode conversion section 600a as described above with respect to Figs. 6a to 6c. The de-multiplexer section 800a corresponds to the de-multiplexer section 800a as described above with respect to Figs. 8a to 8c.

In the first optical waveguide 511 of the mode conversion section 600a TM0 mode 606 is converted to TE1 mode 608a, 608b that enters the second optical waveguide 512 of the de-multiplexer section 800a where it is converted to TE0 mode and coupled to the third optical waveguide 513 of the de-multiplexer section 800a.

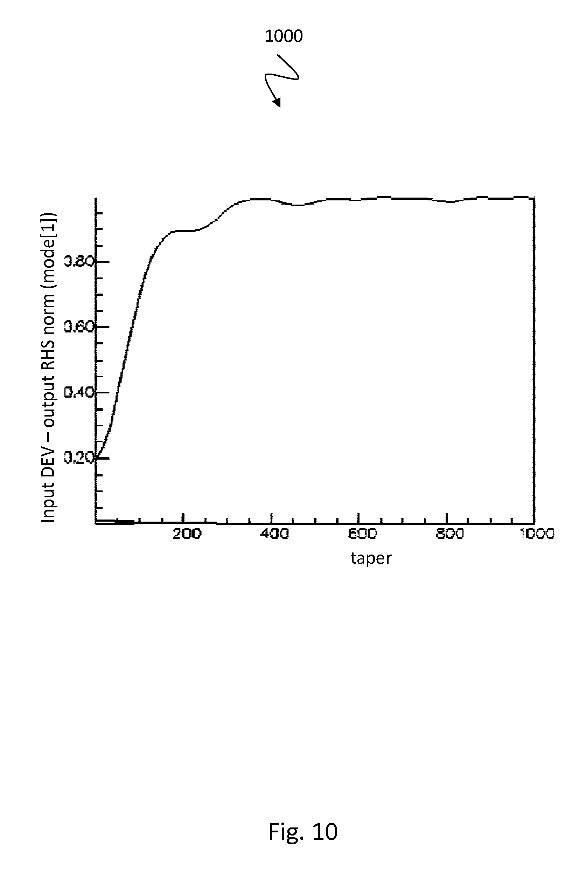

Fig. 10 shows a performance diagram 1000 illustrating coupling efficiency between the TE1 mode on the input waveguide and the TE0 mode on the upper output waveguide of the polarization splitter and rotator device 900 shown in Fig. 9. The simulation of coupling efficiency between the TE1 and the TE0 mode as a function of the second section length shows that coupling efficiency around 100% is achievable if the section is longer than 400µm.

The novel nature of the splitter-rotator device is in both stages, the mode converter and the de-multiplexer, and in their combination. The conversion of the TM0 to the TE1 mode according to the disclosure using a shallow waveguide is CMOS compatible and requires no additional processing. Moreover, the adiabatic coupling of the second and third optical waveguide of the output coupling in the de-multiplexing section for de-multiplexing TE1 and TE0 mode allows for very large optical bandwidth and robustness.

With proper design, the fabrication tolerances are very relaxed. If the taper is chosen sufficiently long, line width variations and layer thickness variations of about +/-10% can easily be tolerated. Thanks to the use of an adiabatic converter and de-multiplexer the wavelength bandwidth of the PSR may be wider than the C-band.

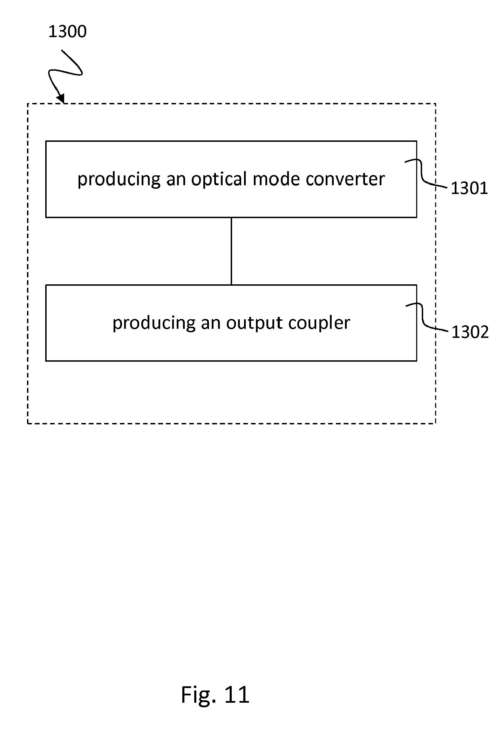

Fig. 11 shows a schematic diagram illustrating a method 1300 for producing a polarization splitter and rotator device including an optical mode converter and an output coupler according to an implementation form. The optical mode converter 1301 may have a structure as the optical mode converter 501, 600a described above with respect to Fig. 5 and Fig. 6. The output coupler may have a structure as the output coupler 503, 800a described above with respect to Fig. 5 and Fig. 8.

The method 1300 includes producing an optical mode converter 1301 by forming a core of a first optical waveguide, removing material from the core to create an asymmetric shape of the core and embedding the core into a cladding, wherein the asymmetric shape is provoking polarized light coupled into the first optical waveguide to exchange its transverse magnetic mode of zeroth order to a transverse electric mode of first order while leaving its transverse electric mode of zeroth order unchanged. The method 1300 includes producing an output coupler 1302 by coupling a second optical waveguide to the first optical waveguide and adiabatically coupling a third optical waveguide to the second optical waveguide, wherein the adiabatically coupling is provoking the polarized light coupled from the first optical waveguide into the second optical waveguide to spread its power between the second optical waveguide and the third optical waveguide by coupling its transverse electric mode of first order as transverse electric mode of zeroth order into the third optical waveguide and keeping its transverse electric mode of zeroth order propagating in the second optical waveguide without coupling to the third optical waveguide.

The material may be removed from the core by etching or grinding. Producing the optical mode converter 1301 and the output coupler 1302 may be performed by CMOS compatible wafer-scale processing.

The polarisation (beam) splitter and rotator (PSR or PBSR) according to the disclosure may be used in all high performance receivers (e.g. coherent receiver). Using stand-alone silicon waveguides, on-chip PSRs using silicon nitride waveguides have a superior performance compared to silicon waveguides for passive functions.

The methods, systems and devices described herein may be implemented as hardware circuit within a chip or an integrated circuit or an application specific integrated circuit (ASIC) of a Digital Signal Processor (DSP). The invention can be implemented in digital and/or analogue electronic circuitry.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A polarization splitter and rotator device (500), comprising:
an optical mode converter (501) comprising a first optical waveguide (511), wherein a core (515, 517a, 517b) of the first optical waveguide (511) is asymmetrically shaped provoking polarized light coupled into the first optical waveguide (511) to exchange its transverse magnetic mode of zeroth order (TM0) to a transverse electric mode of first order (TE0) while leaving its transverse electric mode of zeroth order (TE0) unchanged; and
an output coupler (503) comprising a second optical waveguide (512) coupled to the first optical waveguide (511) and a third optical waveguide (513) adiabatically coupled to the second optical waveguide (512), the adiabatically coupling provoking the polarized light coupled from the first optical waveguide (511) into the second optical waveguide (512) to spread its power between the second optical waveguide (512) and the third optical waveguide (513) by coupling its transverse electric mode of first order (TE1) as transverse electric mode of zeroth order (TE0) into the third optical waveguide (513) and keeping its transverse electric mode of zeroth order (TE0) propagating in the second optical waveguide (512) without coupling to the third optical waveguide (513).

2. The polarization splitter and rotator device (500) of claim 1,
wherein the shape of the core (515, 517a, 517b) of the first optical waveguide (511) is asymmetric with respect to a vertical axis and/or a horizontal axis of the first optical waveguide (511).

3. The polarization splitter and rotator device (500) of claim 1 or 2,
wherein the core (515, 517a, 517b) of the first optical waveguide (511) comprises at least one abrasion forming the asymmetric shape of the core (515, 517a, 517b).

4. The polarization splitter and rotator device (500) of one of the preceding claims,
wherein the core (515, 517a, 517b) of the first optical waveguide (511) comprises a first section (515) and a second section (517a, 517b) having a different thickness than the first section (515), wherein the different thickness of the first section (515) and the second section (517a, 517b) forms the asymmetric shape of the core (515, 517a, 517b).

5. The polarization splitter and rotator device (500) of one of the preceding claims,
wherein a cross-section of the core (515, 517a, 517b) of the first optical waveguide (511) is asymmetric.

6. The polarization splitter and rotator device (500) of one of the preceding claims,
wherein a cross-section of the core (515, 517a, 517b) of the first optical waveguide (511) is shaped as a first rectangle (521) put on top of a second rectangle (523a, 523b) having a different size than the first rectangle (521).

7. The polarization splitter and rotator device (500) of one of the preceding claims,
wherein the second optical waveguide (512) is a continuation of the first optical waveguide (511).

8. The polarization splitter and rotator device (500) of one of the preceding claims,
wherein the second optical waveguide (512) is symmetrically shaped.

9. The polarization splitter and rotator device (500) of one of the preceding claims,
wherein the core (515, 517a, 517b) of the first optical waveguide (511) is formed as a tapered structure in a longitudinal direction of the first optical waveguide (511).

10. The polarization splitter and rotator device (500) of one of the preceding claims,
wherein the core (515, 517a, 517b) of the first optical waveguide (511) has a refractive index in the range between 1.8 and 2.5.

11. The polarization splitter and rotator device (500) of one of the preceding claims,
wherein the core (515, 517a, 517b) of the first optical waveguide (511) is made of one of Silicon Nitride, SiON, ta2O5 and TiO2.

12. The polarization splitter and rotator device (500) of one of the preceding claims,
wherein the core (515, 517a, 517b) of the first optical waveguide (511) is embedded into a cladding (519) having a different refractive index than the core (515, 517a, 517b), in particular a cladding (519) made of silicon dioxide.

13. A method (1300) for producing a polarization splitter and rotator device (500), the method comprising:
producing an optical mode converter (1301) by forming a core of a first optical waveguide, removing material from the core to create an asymmetric shape of the core and embedding the core into a cladding, wherein the asymmetric shape is provoking polarized light coupled into the first optical waveguide to exchange its transverse magnetic mode of zeroth order to a transverse electric mode of first order while leaving its transverse electric mode of zeroth order unchanged; and
producing an output coupler (1302) by coupling a second optical waveguide to the first optical waveguide and adiabatically coupling a third optical waveguide to the second optical waveguide, wherein the adiabatically coupling is provoking the polarized light coupled from the first optical waveguide into the second optical waveguide to spread its power between the second optical waveguide and the third optical waveguide by coupling its transverse electric mode of first order as transverse electric mode of zeroth order into the third optical waveguide and keeping its transverse electric mode of zeroth order propagating in the second optical waveguide without coupling to the third optical waveguide.

14. The method (1300) of claim 13,
wherein the material is removed from the core by etching.

15. The method (1300) of claim 13 or 14,
wherein producing the optical mode converter (1301) and the output coupler (1302) is performed by CMOS compatible wafer-scale processing.
